# EUROPEAN PATENT APPLICATION

(11) **EP 4 835 425 A2**
(43) Date of publication of application: **04.11.2026**
(21) Application number: 26165337.2
(22) Date of filing: 17.03.2026
(51) Int. Cl.: G01L 19/14, G01L 9/00, G01L 9/14, G01L 19/00, G01L 19/06

(54) **PRESSURE SENSOR**

(30) Priority: 07.04.2025 CN 202520639779 U
(71) Applicant: Illinois Tool Works Inc., Glenview IL 60025 (US)
(72) Inventor: LAI, Yong, Glenview, 60025 (US); BAI, Lijuan, Glenview, 60025 (US)
(74) Representative: HGF

(57) **Abstract**

The present application proposes a pressure sensor, the pressure sensor comprises: a first air cover (5) and a second air cover (4) and a pressure sensing component (6), the pressure sensing component (6) is sandwiched between the first air cover (5) and the second air cover (4), the chamber between the first air cover (5) and the second air cover (4) is partitioned by the pressure sensing component (6) into an upper chamber (21) and a lower chamber (22), the second air cover (4) has a peripheral wall, on the inner side surface of the peripheral wall a hook (49) is provided, the outer side of the first air cover (5) is formed with a matching engagement structure that is mutually engaged with the hook (49) of the second air cover (4), the bottom of the second air cover (4) is provided with a communication channel (41), and the bottom of the second air cover (4) except for the communication channel (41) is a fully enclosed structure. By following the technical solution of the present application, a pressure sensor is achieved that can effectively prevent foreign objects from entering, does not interfere with sensor performance, and is convenient for assembly.

## Description

### TECHNICAL FIELD

This application relates to a sensor, particularly a pressure sensor for detecting operating parameters of household appliances.

### BACKGROUND ART

As household appliance products develop towards higher performance and greater precision, pressure sensors, as one of the core components, are widely used in appliances such as washing machines. In traditional pressure sensors, components like the air cover, casing, and pressure sensing component usually need to be installed one by one, making the installation operation relatively cumbersome.

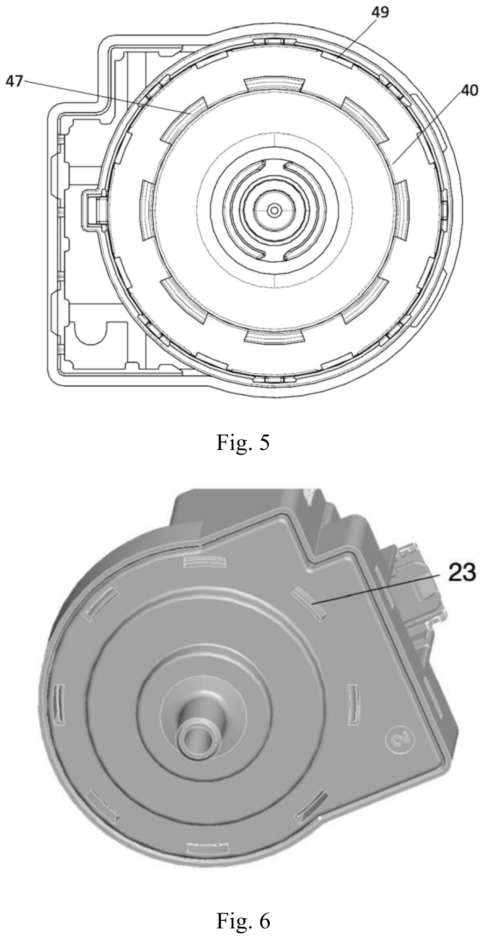

Furthermore, in traditional pressure sensors, components such as the air covers are coupled by the snap-fitting of plastic parts. However, in the injection molding process used to form the snap-fit structure, a corresponding mold core is required, and this mold core needs to be removed after injection molding. Therefore, traditional pressure sensors are provided with a through hole 23 at the bottom (see Figure 6) to facilitate the removal of the mold core for forming the snap-fit structure. However, this design can easily allow external foreign objects (such as dust, ants, etc.) to enter the sensor interior through the through hole at the bottom, thereby affecting the normal operation of the sensor.

In the prior art, some designs address this issue through press-fitting manufacturing. For example, some products use additional metal parts to press-fit the upper and lower housings, tightly coupling the air cover and the main body of the sensor, avoiding the presence of holes, thereby preventing foreign objects from entering. However, on one hand, the metal parts require precise alignment and positioning to ensure no deviation during assembly, increasing the demand for precision, and the press-fitting action of the metal parts requires additional tools, leading to increased process steps and time costs in the assembly process. On the other hand, metal parts can interfere with the sensor's magnetic field, affecting the sensor's accuracy and stability. Especially for some high-sensitivity pressure sensors, the presence of metal parts may cause measurement errors, and in severe cases, may render the sensor completely inoperable.

Additionally, in the prior art, the various components of the pressure sensor's magnetic core assembly are typically fixed by bonding or mechanical fitting. However, the fastening operation of the existing structure is complex, affecting assembly efficiency and fastening reliability.

Furthermore, in the prior art, the connection between the magnetic core assembly and the pressure sensing component is typically achieved via fasteners, which makes the installation operation cumbersome and can easily affect the pressure sensing characteristics.

Therefore, conventional pressure sensors have problems such as complex assembly operations, potential for foreign object intrusion, and impacts on sensor accuracy.

### SUMMARY OF THE INVENTION

A first aspect of the present application provides a pressure sensor. The pressure sensor includes: a first air cover, a second air cover, and a pressure sensing component. The pressure sensing component is sandwiched between the first air cover and the second air cover. The chamber between the first air cover and the second air cover is partitioned by the pressure sensing component into an upper chamber and a lower chamber. The second air cover has a peripheral wall. A hook is provided on an inner side surface of the peripheral wall. An outer side of the first air cover is formed with a matching engagement structure that engages with the hook of the second air cover. A bottom of the second air cover is provided with a communication channel. The bottom of the second air cover except for the communication channel a fully enclosed structure.

According to the pressure sensor of the first aspect, the pressure sensing component is sandwiched between the first air cover and the second air cover, and the first air cover and the second air cover are formed with mutually engaging engagement structures. Therefore, it is only necessary to press the first air cover into the second air cover to simultaneously assemble the multiple components of the first air cover, the second air cover, and the pressure sensing component, thereby simplifying the assembly operation. Moreover, the bottom of the second air cover is an enclosed structure, thus eliminating the potential for foreign object intrusion. Furthermore, since no additional metal parts are required, any impact on the sensor's accuracy is avoided.

In the above first aspect, preferably, a step is formed on an inner wall of the second air cover. The pressure sensing component is placed on an upper surface of the step. A flange is formed at an inner periphery of the step. This flange abuts against a diaphragm of the pressure sensing component from below, thereby preventing the diaphragm from collapsing.

In the above first aspect, preferably, the flange is formed with recesses respectively at positions corresponding to the multiple hooks along the peripheral direction, thereby facilitating the removal of the mold core through the recesses without the need to form a through hole on the bottom of the second air cover for removing the mold core.

In the above first aspect, preferably, the hooks and the recesses are respectively arranged at uniform intervals along the peripheral direction, thereby ensuring stable engagement of the first air cover and the second air cover and stable support for the diaphragm.

In the above first aspect, preferably, the hook has an annular hook edge, and the hook edge is continuously formed along the peripheral direction, thereby achieving more secure engagement of the first air cover and the second air cover.

In the above first aspect, preferably, the lower side of the hook of the second air cover forms an engaging surface for engagement with the first air cover, and the side surface of the hook of the second air cover forms an inclined surface, thereby making the assembly process of engaging the first air cover and the second air cover with each other easier to perform.

In the above first aspect, preferably, the outer periphery of the pressure sensing component is provided with a sealing edge extending along the circumferential direction of the pressure sensing component, and the first air cover and the second air cover are sealingly coupled through the sealing edge located between them, thereby achieving good sealing of the first air cover and the second air cover.

In the above first aspect, preferably, the pressure sensor further includes a magnetic core assembly and a coil, the magnetic core assembly having: a magnetic core seat, the magnetic core seat having a supporting disc and an intermediate sleeve extending axially from the supporting disc, the center of the intermediate sleeve is configured with an accommodating portion, the intermediate sleeve has a sleeve end at one end away from the supporting disc, the intermediate sleeve is configured with a recessed portion on the outer sidewall of the intermediate sleeve near the sleeve end; a magnetic core cap, the magnetic core cap having a lower section on the lower side, the lower section is inserted in the accommodating portion, the center of the magnetic core cap is configured with an upwardly open center hole, the inner peripheral wall of the center hole is configured with a glue flow groove extending in the axial direction, the glue flow groove has a radial opening, the center hole communicates with the outside of the magnetic core cap through the radial opening; a magnetic core, the magnetic core is sleeved on the outer side of the magnetic core cap and the magnetic core seat; there is a radial gap between the lower section and the accommodating portion, there is a gap in the axial direction between the sleeve end and the magnetic core cap, and there is a radial gap between the recessed portion and the magnetic core. Here, glue dispensing can be performed simply and quickly during the assembly process, ensuring the accuracy of the glue dispensing position, achieving firm coupling of the various components of the magnetic core assembly, and having a wide adjustment range for the amount of glue, able to adapt to glues with different physical properties.

In the above first aspect, preferably, the magnetic core seat further has a coupling sleeve; the central part of the pressure sensing component is configured with a carrier, the carrier is centrally configured with an upwardly open groove, and the carrier has elasticity; the coupling sleeve has a radially outward protruding shoulder at its lower end, the coupling sleeve together with the shoulder is installed in the groove in a form-fitting manner, and the supporting disc is supported on the carrier. Here, it is possible to achieve a stable connection without using additional fixing measures throughout the entire installation process, relying only on the elastic force of the pressure sensing component itself, effectively reducing the impact of the process on product performance.

In the above first aspect, preferably, a protrusion is provided at the center of the groove, and the protrusion is inserted into the centering hole at the center of the bottom of the shoulder, thereby achieving accurate centering of the magnetic core seat relative to the pressure sensing component.

### BRIEF DESCRIPTION OF THE DRAWINGS

Fig. 1 is a perspective view of the pressure sensor according to the present application;
Fig. 2 is a longitudinal sectional view of the pressure sensor in Fig. 1;
Fig. 3 is a partially enlarged schematic diagram of the sectional view shown in Fig. 2;
Fig. 4 is a perspective view showing the internal structure of the second air cover of the pressure sensor of the present application;
Fig. 5 is a top view of the second air cover of the pressure sensor according to the present application, in which the internal structure of the second air cover is shown;
Fig. 6 is a partial perspective view of a prior art pressure sensor viewed from below and from the side;
Fig. 7 shows perspective views, sectional views, and a plan view of various components of the magnetic core assembly according to the present application;
Fig. 8 shows a sectional view and a partially enlarged sectional view of the magnetic core assembly and the pressure sensing component according to the present application.

### DESCRIPTION OF THE EMBODIMENTS

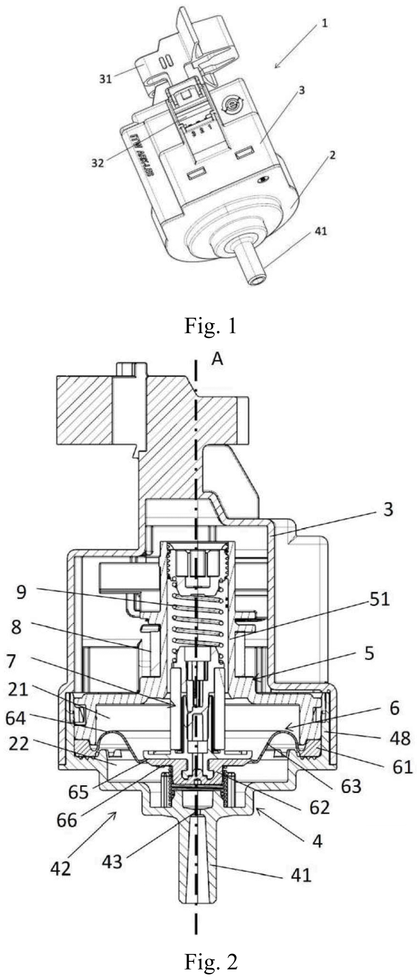

Figure 1 shows a perspective view of a pressure sensor according to the present application. As shown in Figure 1, the pressure sensor 1 comprises a housing 2 and a cup-shaped casing 3 sleeved on the housing 2. On the peripheral side of the cup-shaped casing 3, a connecting structure 31 is provided, by means of which the pressure sensor 1 is fixed, for example, on a washing machine (not shown). On the peripheral side of the cup-shaped casing 3, a signal connector 32 is also provided, which is used to transmit signals generated by the sensor to a control device (not shown) of the washing machine. At the bottom of the housing 2, a communication channel 41 is provided, through which liquid to be measured in the washing machine is communicated with the inside of the housing 2.

Figure 2 shows a longitudinal sectional view of the pressure sensor 1 in Figure 1. As shown in Figure 2, the housing 2 of the pressure sensor 1 is composed of an upper first air cover 5 and a lower second air cover 4. In the assembled state, a chamber is formed between the first air cover 5 and the second air cover 4, and a pressure sensing component 6 is installed in the chamber. The pressure sensing component 6 is arranged between the first air cover 5 and the second air cover 4. On the outer periphery of the pressure sensing component 6, a sealing edge 61 extending along the circumferential direction of the pressure sensing component 6 is formed. In the installed state, the sealing edge 61 sealingly isolates the above-mentioned chamber from the surrounding environment of the housing 2. Furthermore, this sealing edge 61 partitions the chamber between the first air cover 5 and the second air cover 4 into an upper chamber 21 and a lower chamber 22.

The first air cover 5 has a generally bowl-shaped form, and the bowl-shaped first air cover 5 has a sleeve 51 extending upward. The second air cover 4 also has a generally bowl-shaped form, and the bottom 42 of the bowl-shaped second air cover 4 is configured with a fluid channel 43 fluidly connected to the communication channel 41. The first air cover 5 and the second air cover 4 are sealingly coupled via the sealing edge 61 of the pressure sensing component 6 located between them.

An opening (not shown) is formed on the first air cover 5, thereby connecting the upper chamber 21 to the atmospheric environment. The lower chamber 22 is connected to the drum (not shown) of the washing machine via the communication channel 41. When the liquid level in the drum of the washing machine changes, the air pressure in the lower chamber 22 also changes, and the pressure difference between the upper chamber 21 and the lower chamber 22 causes the pressure sensing component 6 to deform.

According to an embodiment of the present application, the pressure sensing component 6 has a carrier 62, a diaphragm 63 arranged around the carrier 62, and a sealing edge 61. The carrier 62 has a center disc 66. The diaphragm 63 extends outward from the disc edge 65 of the center disc 66 of the carrier 62, forming an arching portion 64. The pressure sensing component 6 further includes the aforementioned sealing edge 61 extending around the diaphragm 63, and the sealing edge 61 is clamped between the first air cover 5 and the second air cover 4, thereby sealingly separating the upper chamber 21 and the lower chamber 22. The center disc 66 of the carrier 62 and the sealing edge 61 exert pressure on the diaphragm 63, causing the diaphragm 63 to arch upward between the disc edge 65 of the carrier 62 and the inner side of the sealing edge 61, forming the arching portion 64. In a preferred embodiment, the pressure sensing component 6 is integrally formed.

The pressure sensor 1 further includes a magnetic core assembly 7 and a coil 8, which together form a variable inductance sensor. The magnetic core assembly 7 has a magnetic core seat 71, a magnetic core cap 72, and a magnetic core 73, which is made of a ferromagnetic material. The magnetic core assembly 7 is installed inside the housing 2 and can move relative to the housing 2 following the deformation of the pressure sensing component 6. In one embodiment, the coil 8 is arranged coaxially with the housing 2. When the magnetic core assembly 7 moves relative to the housing 2, the magnetic core 73 of the magnetic core assembly 7 enters and exits the space surrounded by the coil 8, causing a change in the inductance of the coil 8. In one embodiment of the present application, the coil 8 is wound on the outer side of the sleeve 51 of the first air cover 5.

The magnetic core assembly 7 is carried above the carrier 62 of the pressure sensing component 6. As the pressure sensing component 6 deforms, the magnetic core assembly 7 moves relative to the housing 2 accordingly, forming a variable inductance sensor with the coil 8 wound on the outer side of the sleeve 51 of the first air cover 5.

During operation, if the liquid level rises, the air pressure in the lower chamber 22 gradually increases, causing the pressure sensing component 6 to be subjected to upward pressure. The diaphragm 63 moves upward, driving the magnetic core assembly 7 to rise. As the magnetic core assembly 7 rises, the first spring 9 is compressed. As the liquid level drops, the air pressure in the lower chamber 22 decreases, and the first spring 9 recovers, causing the magnetic core assembly 7 to return to its initial position.

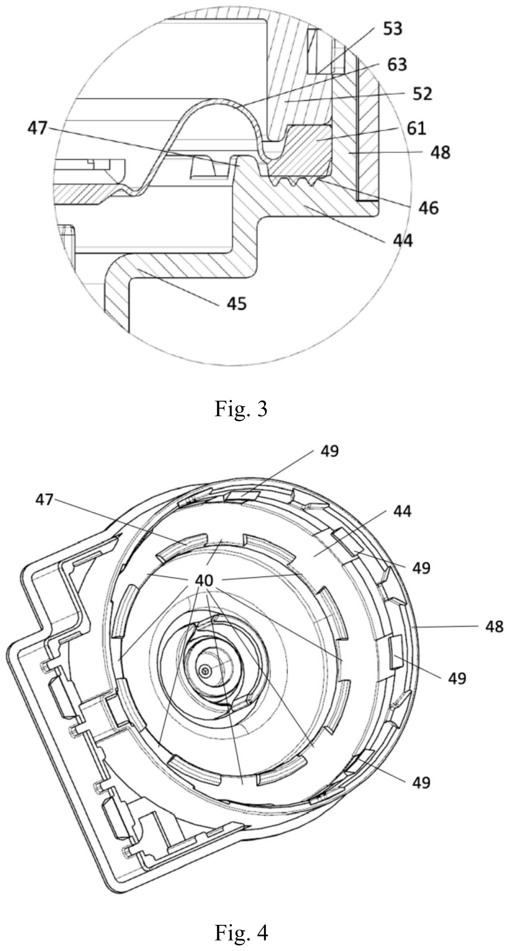

As shown in Figure 3, the second air cover 4 has a two-stage step structure, which includes a step 44 close to the first air cover 5 and a second step 45 spaced apart from the step 44 in a direction away from the first air cover 5 and extending radially inward. The upper surface of the step 44 is formed as an abutting surface 46 for placing the sealing edge 61 of the pressure sensing component 6. In a preferred embodiment, at the inner periphery of the step 44, a flange 47 is formed that protrudes substantially upward along the axial direction A, and in the installed state, the flange 47 is located below the diaphragm 63 of the pressure sensing component 6. The function of the flange 47 is to provide support for the diaphragm 63 of the pressure sensing component 6 to prevent the arching portion of the diaphragm 63 from collapsing when the pressure in the lower chamber 22 is too low. In an alternative embodiment, a pressure sensing component 6 with higher stiffness can also be provided; in the installed state, the diaphragm 63 of such a pressure sensing component 6 with high-stiffness can maintain its arched state on its own, thus allowing the omission of the flange 47 at the inner periphery of the step 44. Materials that meet such high stiffness requirements can be selected from known materials, such as rubber with sufficient stiffness.

In a preferred embodiment of the present application, the longitudinal sections of the abutting surface 46 of the step 44 and the sealing edge 61 of the pressure sensing component 6 are formed in a mutually fitting wavy or serrated shape, thereby achieving a better sealing effect through a labyrinth structure.

As shown in Figures 3 to 5, in a preferred embodiment of the present application, the second air cover 4 has a peripheral wall 48, which extends substantially in the axial direction A toward the top in Figure 2 from the outer periphery of the step 44. In the installed state, the first air cover 5 is accommodated on the inner side of this peripheral wall 48. On the inner side of the peripheral wall 48, at a position spaced in the axial direction A away from the step 44, the peripheral wall 48 is provided with a plurality of hooks 49, which are arranged spaced apart along the circumferential direction, preferably evenly spaced apart. The longitudinal section of the hooks 49 is trapezoidal, with their lower side forming an engaging surface for engaging the first air cover 5. The outer periphery of the first air cover 5 is formed with a mating edge 52 extending downward in the axial direction A, and this mating edge 52 is used to press against the sealing edge 61 of the pressure sensing component 6.

During the installation process, first place the sealing edge 61 of the pressure sensing component 6 on the abutting surface 46 of the step 44 of the second air cover 4. In the case where a flange 47 is provided, place the sealing edge 61 of the pressure sensing component 6 between the flange 47 and the peripheral wall 48 of the second air cover 4. Then, along the axial direction A, lower the first air cover 5 into the inside of the peripheral wall 48 of the second air cover 4. When the mating edge 52 of the first air cover 5 contacts the inclined surface of the hook 49 of the second air cover 4, and the first air cover 5 continues moving downward, the mating edge 52 of the first air cover 5 slides on the inclined surface of the hook 49 of the second air cover 4, causing elastic deformation in both the first air cover 5 and the second air cover 4 until the first air cover 5 completely passes over the hook 49 of the second air cover 4. At this point, the top surface 53 of the mating edge 52 of the first air cover 5 engages below the engaging surface of the hook 49 of the second air cover 4, and the sealing edge 61 of the pressure sensing component 6 is sandwiched between the mating edge 52 of the first air cover 5 and the abutting surface 46 of the step 44 of the second air cover 4. Therefore, through the installation process of the first air cover 5, the relative fixation of the first air cover 5 and the second air cover 4, as well as the sandwiching of the pressure sensing component 6, are simultaneously achieved, simplifying the operation.

In an alternative embodiment, the cross-section of the hook can also be triangular, with the lower side of the triangle forming the engaging surface for the first air cover 5. In another alternative embodiment, the hook 49 can also be continuously formed along the peripheral direction of the second air cover 4, thereby forming a complete annular hook edge on the inside of the peripheral wall 48 of the second air cover 4. In an alternative or additional embodiment, the peripheral side of the first air cover 5 is provided with a matching engagement structure to mutually engage with the hook 49 of the second air cover 4.

As shown in Figures 4 and 5, in the preferred embodiment, along the peripheral direction, recesses 40 corresponding to the plurality of hooks 49 are formed at the flange 47 at the inner periphery of the step 44. In other words, within the peripheral angular range where the hooks 49 are formed, the flange 47 correspondingly has the recesses 40 formed therein. During the injection molding of the second air cover 4, a corresponding mold core (not shown) needs to be placed below each hook 49 so that the mold core can form the engaging surface of the hook 49. During injection molding, said mold core is placed on the step 44, and is removed after molding is completed. In the prior art, through holes 23 (see Figure 6) are opened on the bottom of the second air cover to remove the mold cores. In contrast, in one embodiment of the present application, since the recesses 40 corresponding to the plurality of hooks 49 are formed at the flange 47 at the inner periphery of the step 44, the mold core can move radially inward through the corresponding recess 40, thereby allowing the mold core to be smoothly removed. Thus, it is unnecessary to provide through holes or core-pulling holes on the step 44 of the second air cover 4 for removing the mold cores in the axial direction, so that the bottom of the second air cover 4 is a closed structure except for the communication channel in the installed state (as shown in Figure 1). This can prevent foreign objects, such as dust or ants, from entering the interior of the pressure sensor and affecting its normal operation.

In an alternative embodiment, no recesses 40 corresponding to the plurality of hooks 49 are formed at the flange 47 at the inner periphery of the step 44. During injection molding, for example, by using a mold core with relatively high rigidity to form the engaging surfaces of the hooks 49, a mold core with sufficiently small dimensions can thereby be used. Therefore, even if no recesses 40 are formed at the flange 47, the mold core can retract from the engaging surfaces of the hooks 49 and be removed. In an alternative embodiment, instead of using injection molding, the second air cover 4 is manufactured using an additive manufacturing method (e.g., 3D printing), thereby eliminating the need to consider the method for extracting the mold core. In the two technical solutions described here, in the installed state, the bottom of the second air cover 4 is a fully enclosed structure except for the communication channel.

In an alternative embodiment, the diaphragm 63 of the pressure sensing component 6, which has higher stiffness, can itself maintain an arched state, thereby eliminating the need to provide the flange 47 at the inner periphery of the step 44. In this case, due to the absence of the obstruction from the flange 47, the mold core for the engaging surfaces of the hooks 49 can smoothly move radially inward, and therefore, it is not necessary to provide through holes in the step 44 of the second air cover 4 for axially extracting the mold cores. Consequently, in the installed state, the bottom of the second air cover 4 is a fully enclosed structure except for the communication channel.

In an alternative or additional embodiments of the present application, hooks can also be provided on the outer side of the peripheral wall 48 of the second air cover 4, and corresponding matching engagement components are provided at corresponding positions on the inner side of the cup-shaped casing 3, so that the cup-shaped casing 3 can be engagedly connected with the second air cover 4. This structure of outer hooks is similar to the structure of hooks on the inner side of the peripheral wall 48 of the second air cover 4, and therefore is not described redundantly here.

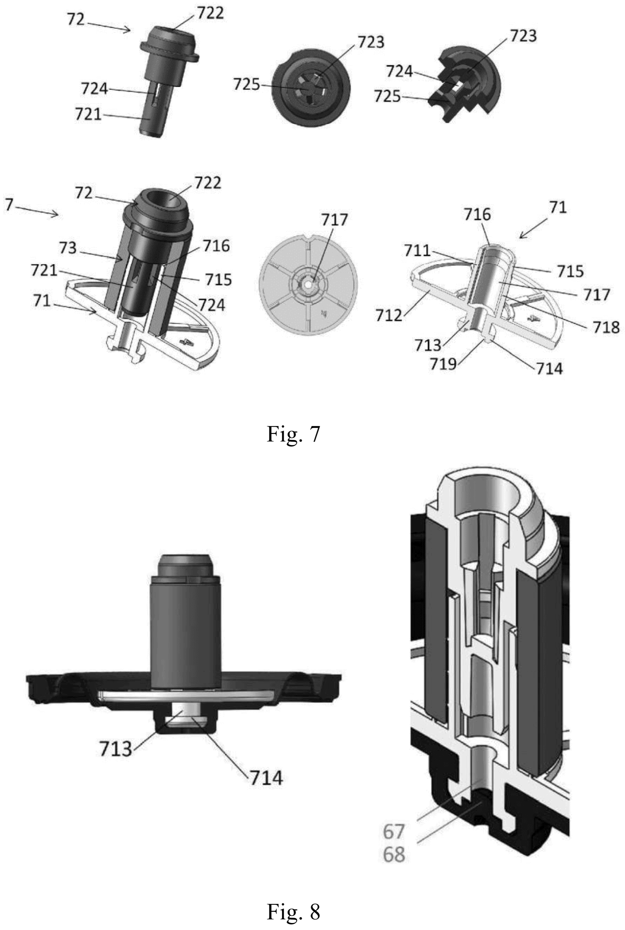

As shown in Figures 2 and 7, in a preferred embodiment of the present application, the magnetic core assembly 7 comprises a magnetic core seat 71, a magnetic core cap 72, and a magnetic core 73. The magnetic core cap 72 is multi-stage cylindrical, and has a lower section 721 at its lower side. A center hole 722 that opens upward is formed in the center of the magnetic core cap 72. One or more glue flow grooves 723 are formed on the inner peripheral wall of this center hole 722, and these glue flow grooves 723 extend along the axial direction A to a blocking portion 725 within the lower section 721. Each glue flow groove 723 has a radial opening 724, and the center hole 722 communicates with the outer side of the magnetic core cap 72 via these radial openings 724.

The magnetic core seat 71 has a coaxially formed intermediate sleeve 711, a supporting disc 712, and a coupling sleeve 713. The supporting disc 712 is formed between the intermediate sleeve 711 and the coupling sleeve 713. The center of the intermediate sleeve 711 is configured with an accommodating portion 717, into which a lower section 721 of the magnetic core cap 72 can be inserted. The intermediate sleeve 711 has a sleeve end 716 that spaces away from the supporting disc 712 along the axial direction. A gap is present in the axial direction between the sleeve end 716 and the magnetic core cap 72. The intermediate sleeve 711 has a recessed portion 715 formed on its outer sidewall near the sleeve end 716. Below this recessed portion 715 is a main sleeve section 718 of the intermediate sleeve 711. The outer diameter of the recessed portion 715 is smaller than the outer diameter of the main sleeve section 718 and the inner diameter of the tubular magnetic core 73. The coupling sleeve 713 is a tubular member extending from the supporting disc 712 to the opposite side of the intermediate sleeve 711 and has a shoulder 714 that protrudes radially outward from the lower end of the tubular portion of the coupling sleeve 713. The supporting disc 712 is a flat disc. In the installed state, the lower surface of the supporting disc 712 contacts the upper surface of the center disc 66 of the pressure sensing component 6 and is supported thereon.

In the assembled state, the lower section 721 of the magnetic core cap 72 of the magnetic core assembly 7 is inserted into the accommodating portion 717 of the magnetic core seat 71, and the magnetic core 73 is sleeved on the outer side of the magnetic core cap 72 and the magnetic core seat 71. In a preferred embodiment, the magnetic core 73 is fixedly connected to the magnetic core cap 72 and the magnetic core seat 71 by an interference fit. The outer diameter of the lower section 721 of the magnetic core cap 72 is smaller than the inner diameter of the accommodating portion 717 of the magnetic core seat 71, thereby forming a glue reservoir gap between the lower section 721 of the magnetic core cap 72 and the accommodating portion 717 of the magnetic core seat 71.

When dispensing glue in the assembled state, the glue is poured into the center hole 722 of the magnetic core cap 72, flows downward through the glue flow grooves 723 to the blocking portion 725, and flows outward through the radial opening 724 into the glue reservoir gap between the lower section 721 of the magnetic core cap 72 and the accommodating portion 717 of the magnetic core seat 71. Furthermore, a portion of the glue flows around from above the sleeve end 716 of the magnetic core seat 71 to reach the gap between the recessed portion 715 and the magnetic core 73. After the glue solidifies, a firm coupling of the magnetic core seat 71, the magnetic core cap 72, and the magnetic core 73 can be achieved.

Through the grooved design and dimensional fit of the magnetic core assembly, the glue dispensing process can be performed simply and quickly during assembly, ensuring accuracy of the dispensing location. Additionally, the adjustable range of glue amount is large, allowing adaptation to glues with different physical properties.

As shown in Figure 8, in a preferred embodiment of the present application, a groove 67 is provided at the center of the carrier 62 of the pressure sensing component 6, and a protrusion 68 is provided at the center of the groove 67. In the installed state, the coupling sleeve 713 of the magnetic core seat 71 together with the shoulder 714 is installed in the groove 67 of the carrier 62 of the pressure sensing component 6, and the protrusion 68 of the carrier 62 of the pressure sensing component 6 is inserted into a centering hole 719 at the center of the bottom of the shoulder 714, to achieve centering and positioning of the magnetic core seat 71 relative to the pressure sensing component 6. In an alternative or additional technical solution, the magnetic core seat 71 is designed with a fastening snap (not shown) for coupling with the pressure sensing component 6.

During installation, it is only necessary to appropriately pull open the groove 67 of the pressure sensing component 6, then insert the coupling sleeve 713 of the magnetic core seat 71 together with the shoulder 714 into the groove 67, and subsequently release the pressure sensing component 6. Relying on the elastic restoring force of the pressure sensing component 6 itself, it securely wraps around the coupling sleeve 713 of the magnetic core seat.

This fitting structure not only ensures tight contact between the pressure sensing component 6 and the bottom plane of the magnetic core seat 71, improving the response speed of the magnetic core to the deformation of the pressure sensing component 6, but also simplifies the installation operation. The entire installation process requires no additional fixing measures; a stable connection can be achieved solely by relying on the elastic force of the pressure sensing component 6 itself, effectively reducing the impact of a process on product performance.

Furthermore, although the above description uses the example of application in a washing machine, the pressure sensor of the present application can also be used in other household appliances requiring pressure sensing.

Although the present application has been described with reference to one or more exemplary embodiments, those skilled in the art will understand that the present application is not limited to the specific structures and components described herein, and various modifications, changes, and adaptations can be understood from the foregoing description without departing from the spirit and scope of the present application as defined by the appended claims. The present application is not limited by the shown ordering of steps, as some steps may be performed in a different order and/or concurrently with other steps. Accordingly, the present application is not limited to the specific embodiment(s) disclosed, but will include all embodiments falling within the scope of the appended claims.

## Claims

1. A pressure sensor, **characterized in that** the pressure sensor comprises:
a first air cover (5), a second air cover (4), and a pressure sensing component (6), wherein the pressure sensing component (6) is sandwiched between the first air cover (5) and the second air cover (4), and a chamber between the first air cover (5) and the second air cover (4) is partitioned by the pressure sensing component (6) into an upper chamber (21) and a lower chamber (22),
wherein the second air cover (4) has a peripheral wall (48), and hooks (49) are provided on an inner side surface of the peripheral wall (48),
wherein an outer side of the first air cover (5) is formed with a matching engagement structure that mutually engages with the hooks (49) of the second air cover (4),
wherein a bottom of the second air cover (4) is provided with a communication channel (41), and the bottom of the second air cover (4) is a fully enclosed structure except for the communication channel (41).

2. The pressure sensor according to claim 1, **characterized in that** a step (44) is formed on an inner wall of the second air cover (4), the pressure sensing component (6) is placed on an upper surface of the step (44), and a flange (47) is formed at the inner periphery of the step (44), wherein the flange (47) abuts a diaphragm of the pressure sensing component (6) from below.

3. The pressure sensor according to claim 2, **characterized in that** recesses (40) are respectively formed on the flange (47) at positions corresponding to a plurality of hooks (49) along the peripheral direction.

4. The pressure sensor according to claim 3, **characterized in that** the hooks (49) and the recesses (40) are respectively arranged at uniform intervals along the peripheral direction.

5. The pressure sensor according to any one of claims 1 to 4, **characterized in that** the hook (49) has an annular hook edge, and the hook edge is continuously formed along the peripheral direction.

6. The pressure sensor according to any one of claims 1 to 4, **characterized in that** an engaging surface for engagement with the first air cover (5) is formed on the lower side of the hook (49) of the second air cover (4), and an inclined surface is formed on the side surface of the hook (49) of the second air cover (4).

7. The pressure sensor according to any one of claims 1 to 4, **characterized in that** a sealing edge (61) extending along the circumferential direction of the pressure sensing component (6) is provided on the outer periphery of the pressure sensing component (6), and the first air cover (5) and the second air cover (4) are sealingly coupled by the sealing edge (61) interposed therebetween.

8. The pressure sensor according to any one of claims 1 to 4, **characterized in that** the pressure sensor further comprises a magnetic core assembly (7) and a coil (8), the magnetic core assembly (7) having:
a magnetic core seat (71), the magnetic core seat (71) having a supporting disc (712) and an intermediate sleeve (711) extending from the supporting disc (712) in the axial direction, the center of the intermediate sleeve (711) being configured with an accommodating portion (717), the intermediate sleeve (711) having a sleeve end (716) at an end away from the supporting disc (712), and a recessed portion (715) being formed on the outer sidewall of the intermediate sleeve (711) near the sleeve end (716);
a magnetic core cap (72), the magnetic core cap (72) having a lower section (721) on the lower side, the lower section (721) being inserted in the accommodating portion (717), the center of the magnetic core cap (72) being configured with an upwardly open center hole (722), an axially extending glue flow groove (723) being formed on the inner peripheral wall of the center hole (722), the glue flow groove (723) having a radial opening (724), the center hole (722) communicating with the outer side of the magnetic core cap (72) through the radial opening (724);
a magnetic core (73), the magnetic core (73) being sleeved on the outer side of the magnetic core cap (72) and the magnetic core seat (71);
a radial gap is present between the lower section (721) and the accommodating portion (717), a gap is present in the axial direction between the sleeve end (716) and the magnetic core cap (72), and a radial gap is present between the recessed portion (715) and the magnetic core (73).

9. The pressure sensor according to claim 8, **characterized in that** the magnetic core seat (71) further has a coupling sleeve (713);
wherein the pressure sensing component (6) is centrally configured with a carrier (62), the carrier (62) is centrally configured with an upwardly open groove (67), and the carrier (62) has elasticity;
wherein the coupling sleeve (713) has a radially outward protruding shoulder (714) at the lower end, the coupling sleeve (713) together with the shoulder (714) is installed in the groove (67) in a form-fitting manner, and the supporting disc (712) is supported on the carrier (62).

10. The pressure sensor according to claim 9, **characterized in that** a protrusion (68) is provided at the center of the groove (67), and the protrusion (68) is inserted into a centering hole (719) at the center of the bottom of the shoulder (714).
